# EUROPEAN PATENT APPLICATION

(11) **EP 4 113 723 A1**
(43) Date of publication of application: **04.01.2023**
(21) Application number: 22179400.1
(22) Date of filing: 16.06.2022
(51) Int. Cl.: H01M 50/216, H01M 50/244, H01M 50/291, H01M 50/503, H01M 50/507

(54) **BATTERY MODULE INCLUDING COIN CELLS AND METHOD OF MANUFACTURING SAME**

(30) Priority: 28.06.2021 KR 20210084116
(71) Applicant: HYUNDAI MOTOR COMPANY, Seoul 06797 (KR); Kia Corporation, Seocho-gu Seoul 06797 (KR)
(72) Inventor: KIM, Kyung Mo, 18280 Hwaseong-si, Gyeonggi-do (KR)
(74) Representative: Viering, Jentschura & Partner mbB Patent- und Rechtsanwälte

(57) **Abstract**

A battery module includes a cell structure configured with a plurality of coin cell arrays each including a plurality of stacked coin cells, the plurality of coin cell arrays being arranged in an aligned manner in a transverse direction of the battery module. Tirst and second bus bars may be arranged on both sides, respectively, of the cell structure and make an electrical connection to each array. First and second end plates may be arranged on a side surface of the first bus bar and the second bus bar, respectively. First and second covers may be arranged in front of and behind, respectively, the cell structure, with which the first and second end plates, respectively, may be combined, and which cover the front and the rear sides, respectively, of the cell structure.

## Description

### BACKGROUND OF THE DISCLOSURE

### Field of the Disclosure

The present disclosure relates to a battery module including coin cells and a method of manufacturing the battery module including coin cells.

### Background

In recent years, in keeping with the worldwide trend toward reduction in carbon dioxide emissions, there has been a growing demand for electric vehicles. Typical internal combustion engine vehicles generate drive power through fossil fuel combustion. In contrast, electric vehicles generate drive power by driving a motor using electric energy stored in an energy storage apparatus.

The performance of the electric vehicle may be dependent on the capacity and performance of a battery corresponding to the energy storage apparatus storing the electric energy provided by a drive motor.

A vehicle battery storing electric energy supplied to a motor to generate drive power of a vehicle preferrably has excellent features, such as high charging and discharging performance, and long lifetime. Furthermore, the vehicle battery preferably has a high level of performance of a mechanical component that may be robust against a harsh traveling environment such as a high-temperature environment or an environment where large vibration occurs.

In addition, from the perspective of a vehicle manufacturer, it may be advantageous to use a battery hardware component in the form of a module of standardized size or capacity that may be applicable to various types of vehicles.

All-solid-state battery technology has been actively developed to substitute for a battery cell in the form of a pouch. The all-solid-state battery has a broader range of operating temperatures than a lithium polymer-based battery and thus may not need a separate cooling component. The all-solid-state battery may also have an increased capacity that may be approximately 2 to 5 times that of the lithium polymer-based battery.

However, an all-solid-state battery cell has the disadvantage of being unable to have a larger area than a lithium polymer-based battery cell. An extra-high pressure pressing process needs to be applied in order to manufacture the all-solid-state battery, but may still be difficult to apply with respect to a large area due to current technological and economical limitations.

The foregoing is intended merely to aid in the understanding of the background of the present disclosure, and is not intended to mean that the present disclosure falls within the purview of the related art that may be already known to those skilled in the art.

### SUMMARY OF THE DISCLOSURE

Embodiments of the exemplary disclosure provided herein include a method of manufacturing a battery module including all-solid-state battery cells manufactured in the form of a small coin despite the fact that it is difficult to achieve a large area of the all-solid-state and a method of manufacturing this battery module.

According to an exemplary embodiment of the present disclosure, there may be provided a battery module including coin cells, the battery module including: a cell structure configured with a plurality of coin cell arrays each including a plurality of stacked coin cells, the plurality of coin cell arrays being arranged in an aligned manner in a transverse direction of the battery module; a first bus bar and a second bus bar that may be arranged on both sides, respectively, of the cell structure and make an electrical connection to each coin cell array; a first end plate and a second end plate that may be arranged on a side surface of the first bus bar and the second bus bar, respectively; and a first cover and a second cover which may be arranged in front of and behind, respectively, the cell structure, with which the first end plate and the second end plate, respectively, may be combined, and which cover the front and the rear sides, respectively, of the cell structure.

In the exemplary battery module, electrode terminals on facing surfaces of adjacent coin cells included in the coin cell array may be connected to each other by a bonding wire.

In the exemplary battery module, the bonding wire may be bent in a V-shape and pressed between the adjacent coin cells.

The exemplary battery module may further include: a first cell carrier having a plurality of receiving holes receiving one or several coin cells of each of the plurality of coin cell arrays from a first direction; and a second cell carrier having a plurality of receiving holes receiving one or several other coin cells of each of the plurality of coin cell arrays from a second direction.

In the exemplary battery module, opening portions may be formed in end portions of the plurality of receiving holes in the first cell carrier and the second cell carrier so as to allow end portions of the coin cell arrays received therein to be exposed to the outside therethrough, and the first bus bar and the second bus bar may be fixed on respective external surfaces of the first cell carrier and the second cell carrier having the opening portions.

In the exemplary battery module, electrode terminals formed at the end portions of the plurality of coin cell arrays may be wire-bonded to the first bus bar and the second bus bar, respectively, through the opening portions.

The exemplary battery module may further include: a sensing circuit unit including a first sensing wire and a second sensing wire which may be arranged between the first bus bar and the second bus bar at a front or rear side of the cell structure and the first end portions of which may be connected to the first bus bar and the second bus bar, respectively; and a sensing connector electrically connected to the second end portions of the first sensing wire and the second sensing wire.

In the exemplary battery module, the first cover or the second cover may have an opening portion through which one portion of the first bust bar or the second bus bar, or the sensing connector may be exposed to the outside.

In the exemplary battery module, the first end plate and the second end plate may have an external plate exposed to the outside and an internal plate covered with the external plate and brought into contact with the cell structure and the first bus bar and the second bus bar, and the external plate may include a concave-convex portion.

The exemplary battery module may further include a first clamp and a second clamp which may be arranged on upper and lower portions, respectively, of the cell structure, which have a structure of a bar extending from a center portion of the first end plate to a center portion of the second end plate. Respective opposite end portions of the first clamp and second clamp may be joined to the first end plate and the second end plate, respectively.

In the exemplary battery module, the coin cell may be an all-solid-state battery.

According to an exemplary embodiment of the present disclosure, there may be provided a method of manufacturing a battery module including coin cells, the method including: forming a plurality of coin cell arrays by stacking a plurality of coin cells; receiving the plurality of coin cell arrays in a plurality of receiving holes in a first carrier and in a plurality of receiving holes in a second cell carrier, the plurality of receiving holes in each of the first cell carrier and the second cell carrier having a preset alignment structure; connecting electrically electrode terminals of coin cell arrays received in the first carrier to a first bus bar fixed on one side surface of the first cell carrier and connecting electrically electrode terminals of coin cell arrays received in the second carrier to a second bus bar fixed on one side surface of the second cell carrier; arranging a first cover and a second cover in front of and behind, respectively, the first cell carrier and the second cell carrier, arranging a first end plate and a second end plate on respective side surfaces, respectively, of the first cell carrier and the second cell carrier, and combining the first end plate and the second end plate with the first cover and the second cover, respectively; and arranging opposite end portions of a first clamp to an upper center portion of the first end plate and an upper center portion of the second end plate, respectively, and arranging opposite end portions of a second clamp to a lower center portion of the first end plate and a lower center portion of the second end plate, respectively.

In the exemplary method, each of the plurality of coin cells may have a first surface on which a first polarity electrode terminal may be formed and a second surface, as a surface opposite in direction to the first surface, on which a second polarity electrode terminal may be formed, and the forming of the plurality of coin cell arrays may include: aligning the plurality of coin cells along a row in such a manner that the first surface and the second surface alternately face upward; connecting electrically electrode terminals of adjacent coin cells with each other alternately in an upward direction and then in a downward direction according to the order of arrangement of the coin cells in a state of being aligned along a row for electrical connections by a bonding wire; and stacking the plurality of coin cells while bending the bonding wire.

In the exemplary method, a direction in which the bonding wire may be arranged may not be in parallel to a direction in which the coin cells may be arranged.

In the exemplary method, a direction in which the bonding wire may be arranged may intersect a line connecting centers of the coin cells aligned along a row.

In the exemplary method, the forming of the plurality of coin cell arrays may further include pressing in a stacking direction the plurality of stacked coin cells in the forming of the plurality of coin cell arrays, dispensing glue successively in a straight line in the stacking direction on a side surface of a cylindrical structure formed as a result of the stacking, and fixing a stacked structure.

In the exemplary method, the coin cell may be an all-solid-state battery.

In the exemplary battery module including the coin cells and the method of manufacturing the battery module, since a plurality of coin cells may be used, a battery module structure optimized in terms of structure and function may be provided.

In the exemplary battery module including the coin cells and the method of manufacturing the battery module, a module structure may be employed that may be applicable in a case where an all-solid-state battery of which a large area may be difficult to achieve at a current technology level may be manufactured as coin cells. Thus, an optimal solution may be provided in which a battery module may be manufactured using the all-solid-state battery at the current technology state.

Accordingly, various advantages may be achieved. For example, the time of commercializing the battery module that uses the all-solid-state battery may be advanced. Furthermore, energy capacity may be greatly improved compared with an existing lithium-based module and issues related to cooling may be solved.

In a further aspect, a vehicle is provided that comprises one or more battery modules as disclosed herein. The vehicle suitably may be for example an electric-powered vehicle.

The present exemplary disclosure is not limited to those described above. From the following description, it would be apparent to a person of ordinary skill in the art to which the present disclosure pertains that other advantages may be achieved.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating a battery module including coin cells according to an embodiment of the present disclosure;
FIG. 2 is a perspective exploded view illustrating the battery module including coin cells of the battery module illustrated in FIG. 1;
FIGS. 3 to 5 are views each illustrating in proper order a process of manufacturing a coin cell array included in the battery module including coin cells according to the embodiment of the present disclosure;
FIG. 6 is a view illustrating a structure in which two coin cells within the coin cell array included in the battery module including coin cells according to the embodiment of the present disclosure may be stacked;
FIG. 7 is a perspective view illustrating a structure for connection between a cell structure and a bus bar of the battery module including coin cells according to the embodiment of the present disclosure;
FIG. 8 is a view illustrating a flow of electric energy provided by the battery module illustrated in FIG. 7;
FIG. 9 is a view illustrating in more detail an area "B" in FIG. 7 and is also a view illustrating in detail a sensing circuit unit of the battery module including coin cells according to the embodiment of the present disclosure;
FIGS. 10 and 11 are views illustrating from different directions a cell carrier used in the battery module including coin cells according to the embodiment of the present disclosure; and
FIGS. 12 and 13 are views illustrating a step of assembling a plurality of coin cell arrays and cell carriers in a process of manufacturing the battery module including coin cells according to the embodiment of the present disclosure.

### DETAILED DESCRIPTION OF THE DISCLOSURE

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. These terms are merely intended to distinguish one component from another component, and the terms do not limit the nature, sequence or order of the constituent components. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor and is specifically programmed to execute the processes described herein. The memory is configured to store the modules and the processor is specifically configured to execute said modules to perform one or more processes which are described further below.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN)

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about".

Hereinafter, some embodiments of the present disclosure will be described in detail with reference to the exemplary drawings. In adding the reference numerals to the components of each drawing, it should be noted that the identical or equivalent component is designated by the identical numeral even when they are displayed on other drawings. Further, in describing the embodiment of the present disclosure, a detailed description of the related known configuration or function will be omitted when it is determined that it interferes with the understanding of the embodiment of the present disclosure.

A battery module including coin cells according to an embodiment of the present disclosure and a method of manufacturing the battery module will be described in more detail below with reference to the accompanying drawings.

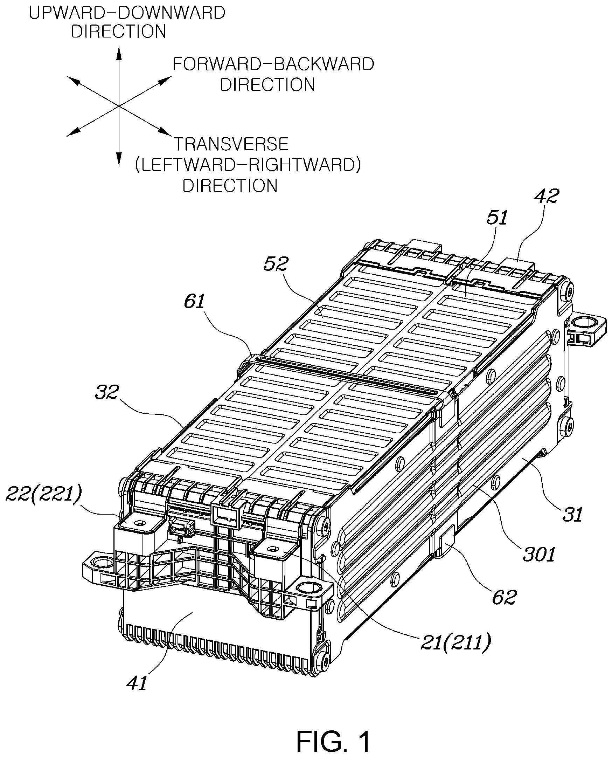

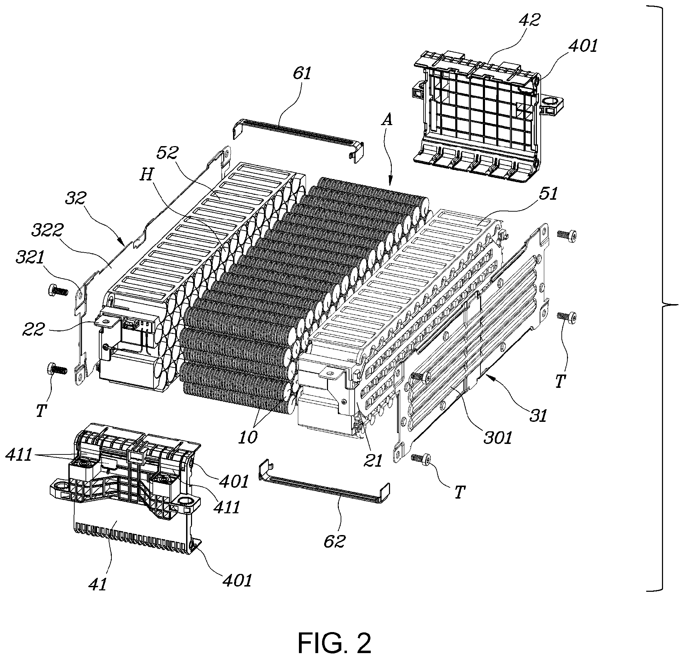

FIG. 1 is a perspective view illustrating the battery module including coin cells according to the embodiment of the present disclosure. FIG. 2 is a perspective exploded view illustrating the battery module including coin cells, the battery module being illustrated in FIG. 1.

With respect to FIGS. 1 and 2, the battery module including coin cells according to the embodiment of the present disclosure may be configured to include a plurality of coin cell arrays 10, a first bus bar 21 and a second bus bar 22, a first end plate 31 and a second end plate 32, and a first cover 41 and a second cover 42. A plurality of coin cells may be stacked in each of the plurality of coin cell arrays 10. The first bus bar 21 and the second bus bar 22 may be arranged on opposite side surfaces, respectively, of a cell structure A formed as a result of aligning the plurality of coin cell arrays 10 and may be electrically connected to the plurality of coin cell arrays 10. The first end plate 31 and the second end plate 32 may be arranged on a side surface of the first bus bar 21 and a side surface of the second bus bar 22, respectively. The first cover 41 and the second cover 42 may be arranged on the front and rear, respectively of the cell structure A and expose one portion of the first bus bar 21 and one portion of the second bus bar 22 in forward and backward directions, respectively.

In addition, the battery module including coin cells according to the embodiment of the present disclosure may further include cell carriers 51 and 52 and a first clamp 61 and a second clamp 62. The cell carriers 51 and 52 each have a plurality of receiving holes H in which the plurality of coin cell arrays 10, respectively, may be received in a manner that may be aligned in one direction. The first clamp 61 and the second clamp 62 may be arranged on upper and lower portions, respectively, of the cell structure A, and respective opposite end portions thereof may be joined to the first end plate 31 and the second end plate 32, respectively.

According to the embodiment, the coin cell may be an all-solid-state battery. The all-solid-state battery has a higher energy capacity and a wider range of operating temperatures than a lithium polymer-based battery. Thus, the all-solid-state battery has the advantage of having relatively fewer issues related to cooling. However, a large area of the solid-state battery may be difficult to achieve when considering the current level of the related technology. Therefore, cells used in various battery systems known in the related art may be difficult to replace.

The advantage of the technology applied to the embodiment of the present disclosure may be that the manufacturing of an all-solid-state battery in the form of a coin cell makes it possible to utilize the excellent performance of the all-solid-state battery and to employ a previously applied module structure as is. The coin cell in the battery module according to the embodiment of the present disclosure may be the all-solid-state battery.

The coin cell array 10 may be formed as a result of stacking a plurality of coin cells. The coin cell may be a secondary cell having the exterior appearance in the form of a flat coin, and may be a coin cell, as a secondary cell, or a coin cell, as an all-solid-state second cell, which may be already commercialized in the art.

Each side of a normal coin cell become positive and negative terminals, respectively. A plurality of coin cells may be stacked in such a manner that terminals opposite in polarity may be connected to each other. Thus, individual coin cells may be electrically connected in series to each other. The coin cell array 10 may include a preset number of coin cells that may be stacked in such a manner that terminals opposite in polarity may be brought into contact with each other. Therefore, respective exposed surfaces of coin cells arranged farthest in the coin cell array 10 may be a positive electrode and a negative electrode, respectively, of the entire coin cell array 10. The coin cell array 10 may have a voltage resulting from adding up voltages of all the coin cells included therein.

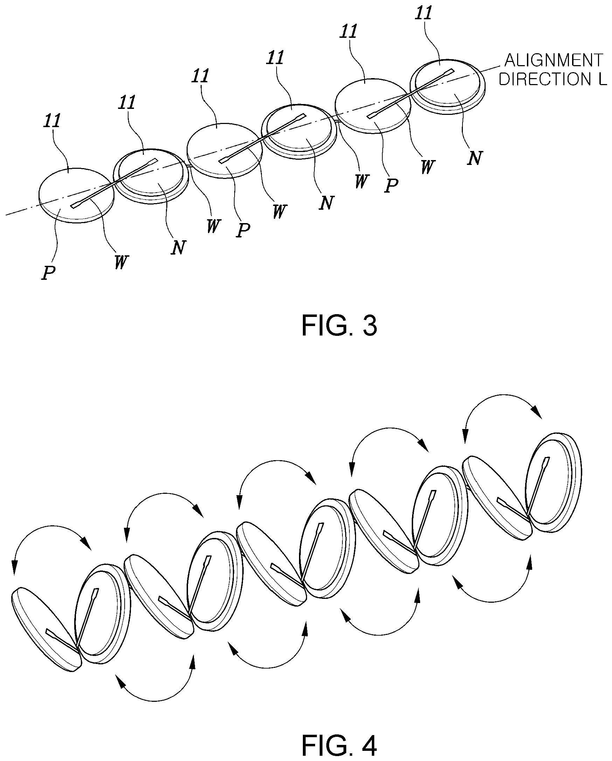

FIGS. 3 to 5 are views each illustrating in proper order a process of manufacturing a coin cell array included in the battery module including coin cells according to the embodiment of the present disclosure.

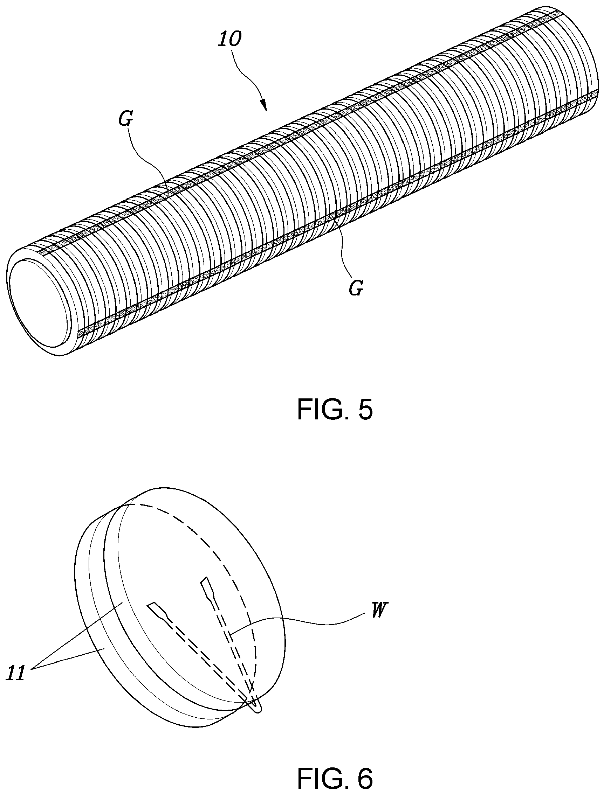

FIG. 6 is a view illustrating a structure in which two coin cells within the coin cell array included in the battery module including coin cells according to the embodiment of the present disclosure may be stacked.

As illustrated in FIG. 3, the process of manufacturing the coin cell array 10 may start from a step of aligning along a row a preset number of coin cells 11 included in the coin cell array 10. Dotted line L in FIG. 3 indicates a direction in which the plurality of coin cells 11 may be aligned.

Particularly, in the step of aligning the coin cells 11 along a row, adjacent coin cells may be aligned in such a manner that opposite surfaces thereof face in the same direction. That is, when a surface of one coin cell on which a positive terminal thereof may be formed may be arranged upward, a surface of a coin cell, adjacent to the one coin cell, on which a negative terminal thereof may be formed, may be aligned to be arranged upward.

Subsequently, respective surfaces of the adjacent coin cells 11, which face in the same direction, may be bonded to each other by a bonding wire (W) and may be brought into electric contact with each other. In this case, according to the order of arrangement of the coin cells 11, wiring bonding may be performed alternately on a surface of the coin cell 11, which faces in one direction and a surface thereof, which faces in the opposite direction. For example, when the wiring bonding is performed on respective surfaces of the first coin cell 11 and the second coin cell 11, which face in one direction, the wiring bonding may be performed on respective surfaces of the second coin cell 11 and the third coin cell 11, which face in the opposite direction.

In this case, it may be desirable that the bonding wire W may be bonded in a state of being arranged in a manner that may not be in parallel to a direction in which the coin cells 11 may be aligned. It may be more desirable that the bonding wire W may be arranged for bonding in a manner that intersects line L connecting the centers of the coin cells 11 aligned along a row. When the coin cells 11 may be later stacked by bending the bonding wire W, this arrangement structure for the bonding wire W may cause the bonding wire W arranged between the coin cells 11 to be stacked to be bent in the form of the letter V and thus may contribute to providing a uniform gap between each of the coin cells 11 stacked.

When the wiring bonding for connecting the coin cells 11 aligned along a row, as described above, may be finished, the coin cells 11 aligned along a row, as illustrated in FIG. 4, may be stacked in such a manner that surfaces of the coin cells 11, on which the bonding wire W may be arranged, may be brought into contact with each other. In this step, the bonding wire W may be arranged in a V-shape between two adjacent coin cells 11. After the coin cells 11 are stacked, the bonding wire V may be completely bent in the form of the letter V by performing a step of pressing the coin cells 11 at a preset pressure in a stacking direction.

Subsequently, as illustrated in FIG. 5, when the stacking of the coin cells 11 is finished, glue may be successively dispensed in a straight line in the height direction on a side surface of a cylindrical structure formed as a result of stacking the coin cells 11, and thus a stacked structure may be fixed, thereby completing the coin cell array 10.

As illustrated in FIG. 6, the bonding wire W may be arranged, in a state of being pressed after bent in the form of the letter V, between each of the coin cells 11 in the coin cell array 10 completed in this manner. The joining of the bonding wire W to a positive terminal of one of two adjacent coin cells 11 and a negative terminal of the other one thereof in the coin cell array 10 may cause a state of electrical connection between the two coin cells 11 to be maintained in a more stable manner.

It is illustrated in FIG. 6 that the bonding wire W may be bent, for example, in the form of the letter V. However, the bonding wire W may be bent in various forms of the letters C, L, J, S, N, and Z whenever necessary.

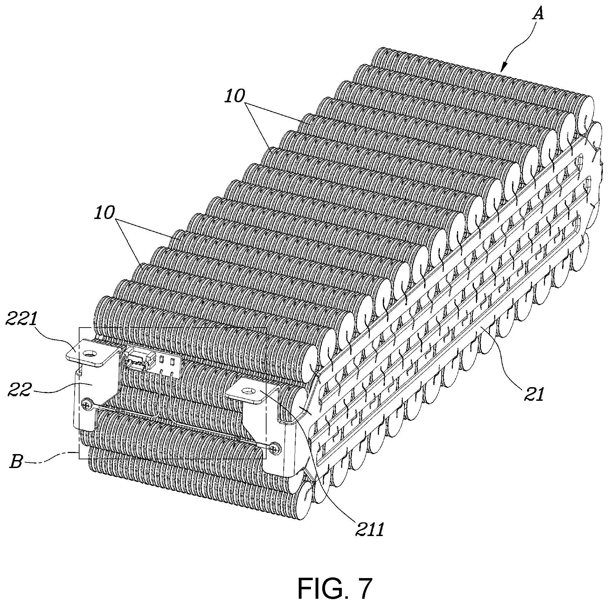

FIG. 7 is a perspective view illustrating a structure for connection between a cell structure and a bus bar of the battery module including coin cells according to the embodiment of the present disclosure.

With reference to FIG. 7, the battery module including coin cells according to the embodiment of the present disclosure has the cell structure A configured with the plurality of coin cell arrays 10. More specifically, the cell structure A may include the plurality of coin cell arrays 10 that may be arranged in such a manner that an electrode of the cell array 10 may be arranged in the transverse direction of the battery module. The plurality of coin cell arrays 10 may be arranged side by side within the cell structure A in such a manner that the electrode of the cell array 10 faces toward the transverse direction of the battery module or may be arranged in layers in the upward-downward direction of the battery module.

The first bus bar 21 and the second bus bar 22 may be arranged in front of and behind, respectively, the cell structure A.

The first bus bar 21 and the second bus bar 22 may be electrically connected to the positive terminal and the negative terminal, respectively, of the coin cell array 10 included in the cell structure A. The first bus bar 21 and the second bus bar 22 may have terminal portions 211 and 221, respectively. The terminal portions 211 and 221 extend inward from respective front ends of the first bus bar 21 and the second bus bar 22, respectively, and upper end portions thereof extend forward. Thus, the terminal portions 211 and 221 make electrical connections to an electric device or the like outside of the battery module. The terminal portions 211 and 221 may be exposed to the outside at an external surface of a first cover described below and may be electrically connected to an electric device or the like outside of the battery module.

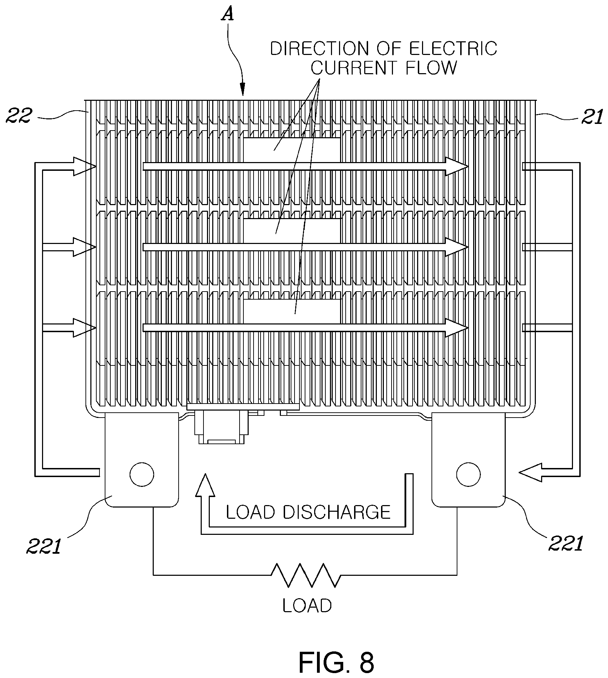

FIG. 8 is a view illustrating a flow of electric energy provided by the battery module illustrated in FIG. 7.

As illustrated in FIG. 8, the positive electrode of the coin cell array within the cell structure A may be connected to the first bus bar 21, and the negative electrode thereof may be connected to the second bus bar 22. Therefore, the plurality of coin cell array 10 within the cell structure A may be connected in parallel between the two bus bars 21 and 22. In addition, a load that may be an external electric device or the like that receives electric energy from the battery module may be connected to the first terminal portion 211 and the second terminal portion 221.

Electric current that may be provided from the plurality of coin cell array 10 through the first bus bar 21 may be provided to the load connected to the first terminal portion 211, and thus load discharge takes place. Electric current that may be provided from the second terminal portion 221 to the load flows to the coin cell array 10 through the second bus bar 22. That is, in the battery module according to the embodiment of the present disclosure, when a load may be connected to the first bus bar 21 and the second bus bar 22 that may be connected to the plurality of coin cell array 10, an electric current flow path along which electric energy may be supplied to the load may be formed.

The first bus bar 21 and the second bus bar 22 each have at least one bar shape extending from the front of the battery module to the rear thereof. The first bus bar 21 and the second bus bar 22 each may have a plurality of bars that may be possibly electrically connected to each other. In an example illustrated in FIG. 7, the first bus bar 21 and the second bus bar 22 each have a plurality of bars that may be arranged side by side in the upward-downward direction in front of the battery module. The first bus bar 21 and the second bus bar 22 each may have a structure where front end portions of the plurality of bars may be integrally manufactured and where rear end portions of the plurality of bars may be integrally manufactured.

A positive terminal of the plurality of coin cell arrays 10 may be connected to the first bus bar 21 by the wiring bonding, and a negative terminal of the plurality of coin cell arrays 10 may be connected to the second bus bar 22 by the wiring bonding.

The battery module according to the embodiment of the present disclosure may include a sensing circuit unit between the first bus bar 21 and the second bus bar 22 in front of the battery module. The battery module serves to monitor a voltage of the battery module.

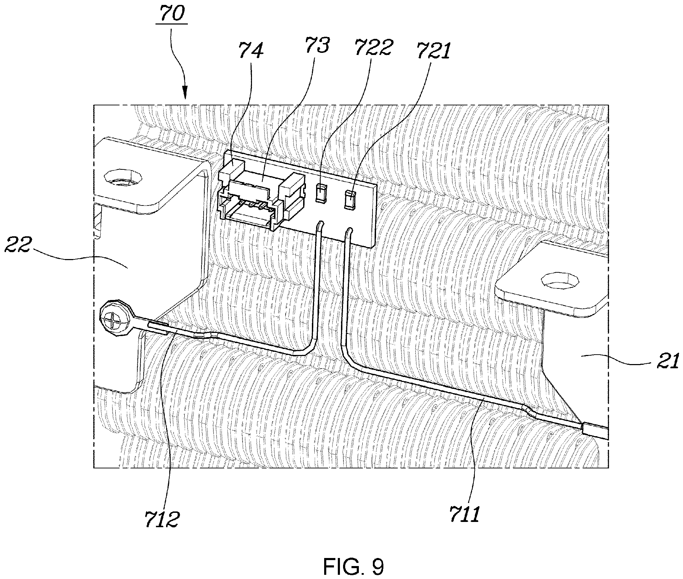

FIG. 9 is a view illustrating in more detail an area "B" in FIG. 7 and is also a view illustrating in detail the sensing circuit unit of the battery module including coin cells according to the embodiment of the present disclosure.

With respect to FIG. 9, a circuit may be formed between the first bus bar 21 and the second bus bar 22 on a front portion of the battery module, that is, on a front portion of the cell structure A. The circuit may monitor a battery voltage.

The sensing circuit unit 70 may include sensing wires 71 1 and 712, fuses 721 and 722, and a sensing connector 73. Respective first end portions of the sensing wires 711 and 712 may be connected to the first bus bar 21 and the second bus bar 22, respectively. Respective first end portions of the fuses 721 and 722 may be connected to the second end portions of the sensing wires 711 and 712, respectively. The second end portions of the fuses 721 and 722 may be connected to the sensing connector 73. The fuses 721 and 722 and the sensing connector 73 may be arranged fixedly on a substrate 74, such as a printed circuit board. Thus, the electrical connection as described above may be made by a structure of the wires formed on the substrate 74.

Although not clearly illustrated in FIG. 9, a connection relationship among the sensing wires 711 and 712, the fuses 721 and 722, and the sensing connector 73 may be well known in the art. It would be apparent to a person of ordinary skill in the art that sensing wires, fuses, and a second connector may be suitably arranged for electrical connections by utilizing a substrate.

The sensing connector 73 may be a component necessary to make a connection with an external controller for monitoring the battery voltage. Although not illustrated, one electric terminal within the connector 73 may be connected to the first bus bar 21 through the fuse 721, and other one electric terminal within the connector 73 may be connected to the second bus bar 22 through the fuse 722. Therefore, the controller or the like that may be electrically connected through the connector 73 may be supplied with a voltage available between the two bus bars 21 and 22, may monitor the supplied voltage, and thus may predict states of the coin cells within the battery module.

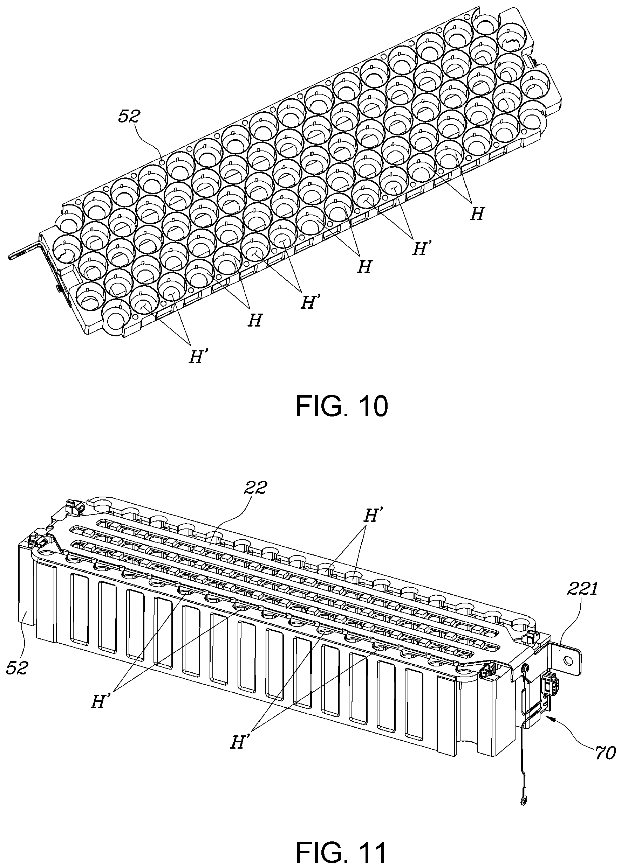

FIGS. 10 and 11 are views illustrating from different directions the cell carrier 52 used in the battery module including coin cells according to the embodiment of the present disclosure.

With reference to FIGS. 10 and 11, the battery module including coin cells according to the embodiment of the present disclosure may include the cell carriers 51 and 52 each having a plurality of receiving holes H. The cell carriers 51 and 52 hold the plurality of coin cell arrays 10 in place and receive the plurality of coin cell arrays 10 in such a manner as to be aligned in one direction. The cell carriers 51 and 52 may be formed of an insulating material, such as plastic, in order to provide electric insulation between each of the plurality of coin cell arrays 10.

More specifically, the cell carriers 51 and 52 may be divided into a first cell carrier 51 and a second cell carrier 52. The first cell carrier 51 and the second cell carrier 52 may be provided on respective opposite ends, respectively, of each of the plurality of coin cell arrays 10 in such a manner as to receive one or several coin cells in each of the plurality of coin cell arrays 10.

An opening portion H' may be formed in an end portion of an receiving hole H provided in each of the cell carriers 51 and 52. An end portion of the coin cell array 10 received in the receiving hole H, that is, an electrode terminal of the coin cell array 10 may be exposed to outside of the cell carriers 51 and 52 through the opening portion H'. Through the opening portion H', the wire bonding may be performed for an electrical connection between each of the bus bars 21 and 22 arranged outward from side surfaces, respectively, of the cell carriers 51 and 52 and the coin cell array 10 received in the cell carriers 51 and 52.

The above-described bus bars 21 and 22 may be arranged fixedly on respective end portions, respectively, of the cell carriers 51 and 52, the respective end portions facing in the transverse direction of the battery module. The above-described sensing circuit unit 70 may be arranged fixedly on respective end portions in front of the battery module, of the cell carriers 51 and 52.

That is, the cell carriers 51 and 52 may align the coin cell arrays 10 in a predetermined arrangement and may hold the coin cell arrays 10 in place. Thus, the cell carriers 51 and 52 may form the exterior appearance of the cell structure A and may serve to provide electric insulation between each of the plurality of coin cell arrays 10. Furthermore, the cell carriers 51 and 52 may serve to physically hold the sensing circuit unit 70 in place. The sensing circuit unit 70 may be electrically connected to the coin cell array 10 and measures the voltage of the battery module that may be formed by the first bus bar 21 and the second bus bar 22, which may be paths for supplying electric energy, and the plurality of coin cell arrays 10.

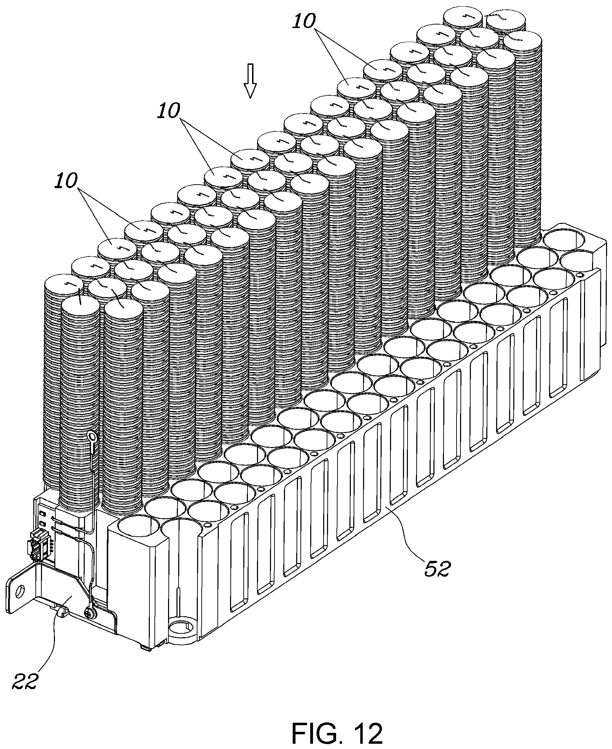

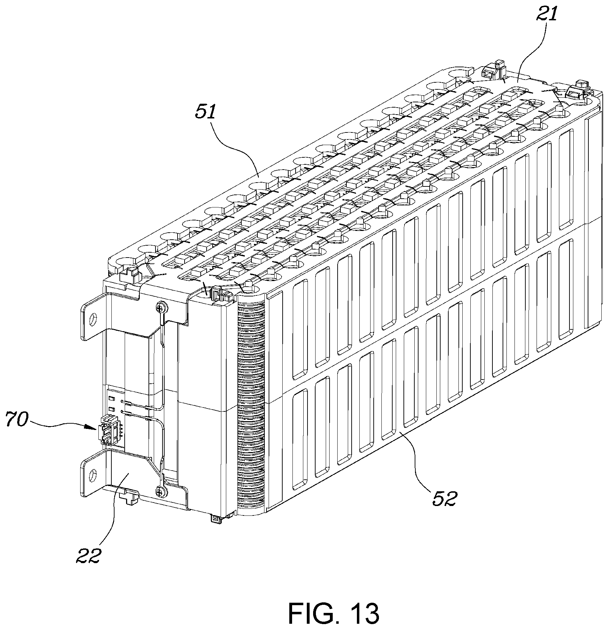

FIGS. 12 and 13 are views illustrating a step of assembling the plurality of coin cell arrays 10 and the cell carriers 51 and 52 in a process of manufacturing the battery module including coin cells according to the embodiment of the present disclosure.

As illustrated in FIGS. 12 and 13, in the process of manufacturing the battery module, the plurality of coin cell arrays 10 formed as a result from the coin cells being wired-bonded and stacked may be received first in the receiving holes, respectively, formed in one cell carrier 52. The cell arrays 10 may be all inserted into the receiving holes, respectively, in the cell carrier 52, and then portions exposed to outside of the cell carrier 52, of the coin cell arrays 10 may be all inserted into the receiving holes, respectively, formed in the cell carrier 51. Thus, the cell carriers 51 and 52 and the coin cell arrays 10 may be assembled.

At this time, the coin cell arrays 10 may be received in the receiving holes, respectively, in the cell carriers 51 and 52 in such a manner that the electrode terminals having the same polarity face toward the same direction.

In this manner, the cell carriers 51 and 52 and the coin cell arrays 10 may be assembled. Thereafter, the electrode terminals of the coin cell array 10, which may be exposed through the opening portions H' formed in the receiving holes in the cell carriers 51 and 52, and the bus bars 21 and 22 fixed on external surfaces, respectively, of the cell carriers 51 and 52 may be wire-bonded. The sensing circuit unit 70 may also be fixed on respective end portions in front of the battery module of the cell carriers 51 and 52.

With reference back to FIGS. 1 and 2, the first cover 41 and the second cover 42 may be arranged on front and rear ends, respectively, of the battery module according to the embodiment of the present disclosure.

The first cover 41 and the second cover 42 may be arranged on the front and rear ends, respectively, of the battery module in order to protect components, such as the cell structure A, the bus bars 21 and 22, and the second circuit unit 70, that may be arranged within the battery module.

An opening portion 411 may be formed in the first cover 41. Through the opening portion 411, the respective terminal portions 211 and 221 of the first bus bar 21 and the second bus bar 22, and the sensing connector 73 of the sensing circuit unit 70 may be exposed to outside of the battery module. The terminal portions 211 and 221 exposed to outside of the battery module through the opening portion 411 may be electrically connected to an external electric device or the like. The sensing connector 73 exposed to outside of the battery module through the opening portion 411 may be electrically connected to a separate controller for monitoring the battery module. Of course, in a case where it may be necessary that the first bus bar 21 and the second bus bar 22 and/or the sensing connector 73 may be exposed to the outside at a rear end portion of the battery module, the second cover 42 may also have the same structure of the opening portion 411 as the first cover 41.

Internally threaded portions 401 may be formed, for nut-bolt connection, in respective side surfaces of the first cover 41 and the second cover 42. End plates 31 and 32 may be combined with the internally threaded portions 401 using bolts T. The end plates 31 and 32 cover the battery module from the transverse direction of the battery module.

The end plates 31 and 32 may be arranged on the outermost coin cells, respectively, in the transverse direction of the battery module, that is, in the direction in which the coin cells may be stacked within the coin cell array. In a case where the coin cell within the coin cell array 10 may be swollen, the end plates 31 and 32 need to prevent the battery module from being deformed and thus keep contact stress between the coin cells uniform. Therefore, the end plates 31 and 32 need to have sufficient stiffness to prevent the deformation of the battery module. It may be desirable that the end plates 31 and 32 include an additional member for keeping the contact stress uniform.

The end plate 32 may include an external plate 321 and an internal plate 322. The external plate 321 may be exposed to outside of the battery module. The internal plate 322 may be covered with the external plate 321 and may be brought into contact with the cell structure A and the bus bars 21 and 22.

The external plate 321 may be formed of a lightweight metal material having sufficient stiffness. The internal plate 322 may be formed of an insulating material that has less stiffness than the external plate 321 but, when brought into contact with the bus bars 21 and 22, provides electric insulation therefrom.

In addition, a concave-convex portions 301 may be formed on a surface of the internal plate 322. The concave-convex portions 301 may provide a uniform pressure of sufficient magnitude according to a shape, a position, and the like of the structure within the battery module, the structure being brought into contact with the end plates 31 and 32. For example, the concave-convex portions 301 that protrude more inward may be formed on portions, respectively, of the internal plate 322 of each of the end plates 31 and 32, the portions being too remote to be brought into contact with the structure within the battery module.

The end plate may be described above with reference to the reference number of one of the two end plates 31 and 32 according to which of the two end plates may be illustrated in FIGS. 1 and 2. However, the end plate that may be not assigned the reference number may also have the same features as the end plate that may be assigned the reference number

The battery module according to the embodiment of the present disclosure may include the first clamp 61 and the second clamp 62.

The first clamp 61 and the second clamp 62 may have the forms of bars extending from upper and lower portions, respectively, of the battery module toward the transverse direction of the battery module. Respective end portions of the first clamp 61 and the second clamp 62 may be joined to the center portions, respectively, in the forward-backward direction, of the end plates 31 and 32 on both sides of the battery module.

The respective end portions of the first clamp 61 and the second clamp 62 may extend vertically in such a manner as to face the end plates 31 and 32, respectively. The vertically extending end portions that face the end plates 31 and 32 may be welded to external surfaces, respectively, of the end plates 31 and 32, and thus positions of the first clamp 61 and the second clamp 62 may be fixed.

In this manner, the first clamp 61 and the second clamp 62 may be joined to the upper and lower portions, respectively, of the two end plates 31 and 32, and thus a distance between respective center portions in the upward-forward-backward direction, of the two end plates 31 and 32 may be kept uniform. The stiffness of the end plates may be applied to the coin cell arrays 10 therein, thereby contributing to maintaining the contact stress on the coin cell arrays 10.

According to the present disclosure, there may be also provided a method of manufacturing the battery module including coin cells, the battery module having the above-described structure.

FIGS. 1 and 13 illustrate not only a finished-product state of the battery module including coin cells according to the embodiment of the present disclosure, but also a work-in-process state of the battery module in an intermediate process of manufacturing the battery module. Thus, separate figures for the method of manufacturing the battery module may be omitted. Furthermore, one or several portions of the method of manufacturing the battery module may be already described above to help understand a structure of the battery module including coin cells according to the embodiment of the present disclosure. Thus, the same description may be not repeated here.

The method of manufacturing the battery module having coin cells according to the embodiment of the present disclosure starts with a step of manufacturing the coin cell array 10 through the process described with reference to FIGS. 3 and 6.

A step of forming the coin cell array 10, as illustrated in FIG. 3, may start with aligning of the plurality of coin cells 11 along a row in such a manner that electrode surfaces opposite in polarity of adjacent coin cells face in the same direction and with bonding of respective surfaces of the adjacent coin cells 11, which face in the same direction, using the bonding wire W. At this point, according to the order of arrangement of the coin cells 11, the wiring bonding may be performed alternately on a surface of the coin cell 11 that faces in one direction and a surface thereof that faces in the opposite direction.

In the step of forming the coin cell array 10, the coin cells 11 may be aligned by bending the bonding wire W in such a manner that surfaces of the coin cells 11, on which the bonding wire W may be arranged, may be brought into contact with each other and then may be stacked.

In addition, in the step of forming the coin cell array 10, the coin cells 11 may be pressed at a preset pressure in the stacking direction, glue may be then dispensed, and thus the stacked structure may be fixed, thereby completing the coin cell array 10.

Subsequently, as illustrated in FIGS. 12 and 13, the coin cell arrays 10 completed may be inserted into the cell carriers 51 and 52, and the cell structure A in which the coin cell arrays 10 may be aligned may be completed. As illustrated in FIG. 7, a step of making electrical connections between the electrode terminal of each of the plurality of coin cell arrays 10 and each of the bus bars 21 and 22 and forming the sensing circuit unit 70 may be performed.

From FIG. 7, the cell carriers 51 and 52 may be omitted to clearly illustrate an electrical connection relationship between the coin cell array and each of the bus bars 21 and 22. However, in a case where the cell carriers 51 and 52 may be used, an electrical connection may be easily made between the electrode terminal of each of the plurality of coin cell arrays 10 and each of the bus bars 21 and 22. Furthermore, the sensing circuit unit 70 may be easily formed. The cell carriers 51 and 52 may be described above. That is, through the wiring bonding, the electrical connection may be made between the electrode terminal of the coin cell array, which may be exposed through the opening portion H' formed in the receiving hole H in the cell carriers 51 and 52 and each of the bus bars 21 and 22. The sensing wires 711 and 712, the fuses 721 and 722, the sensing connector 73, and the substrate 74 may be easily arranged for installation and connection in a manner that may be suitable for voltages of the cell carriers 51 and 52.

Subsequently, as illustrated in FIGS. 1 and 2, a step of arranging the first cover 41 and the second cover 42 in front of and behind, respectively, the cell carriers 51 and 52, arranging the end plates 31 and 32 in the transverse direction of the cell carriers 51 and 52, and combining the first cover 41 and the second cover 42 with each other may be performed.

Finally, a step of arranging the first clamp 61 on upper surfaces of the cell carriers 51 and 52 and joining opposite end portions of the first clamp 61 to the end plates 31 and 32, respectively, and arranging the second clamp 62 on lower surfaces of the cell carriers 51 and 52 and joining opposite end portions of the second clamp 62 to the end plates 31 and 32, respectively, may be performed.

As described above, in the battery module including coin cells according to the embodiment of the present disclosure and the method of manufacturing the battery module, a battery module structure optimized in terms of structure and function may be provided in a case where a plurality of coin cells may be used.

Particularly, the embodiment of the present disclosure may provide a module structure that may be applicable in a case where an all-solid-state battery of which a large area may be difficult to achieve at a current technology level may be manufactured as coin cells. That is, the embodiment of the present disclosure may provide an optimal solution in which a battery module may be manufactured using the all-solid-state battery at the current technology state.

Accordingly, various advantages may be obtained. For example, the time of commercializing the battery module that uses the all-solid-state battery may be advanced. Furthermore, energy capacity may be greatly improved compared with an existing lithium-based module, and issues related to cooling may be solved.

Although the specific embodiment of the present disclosure has been described for illustrative purposes, those skilled in the art will appreciate that various modifications, additions and substitutions may be possible, without departing from the scope and spirit of the disclosure as disclosed in the accompanying claims.

## Claims

1. A battery module including coin cells, the battery module comprising:
a cell structure configured with a plurality of coin cell arrays each of the plurality of coin cell arrays including a plurality of stacked coin cells, the plurality of coin cell arrays being arranged in an aligned manner in a transverse direction of the battery module;
a first bus bar on a first side of the cell structure and a second bus bar on a second side of the cell structure, the first bus bar and the second bus bar make an electrical connection to each coin cell array;
a first end plate arranged on a side surface of the first bus bar;
a second end plate arranged on a side surface of the second bus bar; and
a first cover arranged in front of the cell structure to cover the front side of the cell structure;
a second cover arranged behind the cell structure to cover the rear side of the cell structure.

2. The battery module of claim 1, wherein electrode terminals on facing surfaces of adjacent coin cells included in the coin cell array are connected to each other by a bonding wire.

3. The battery module of claim 2, wherein the bonding wire is bent in a V-shape and pressed between the adjacent coin cells.

4. The battery module of any one of the preceding claims, further comprising:
a first cell carrier having a plurality of receiving holes receiving one or several coin cells of each of the plurality of coin cell arrays from a first direction; and
a second cell carrier having a plurality of receiving holes receiving one or several other coin cells of each of the plurality of coin cell arrays from a second direction.

5. The battery module of claim 4, wherein opening portions are formed in end portions of the plurality of receiving holes in the first cell carrier and the second cell carrier so as to allow end portions of the coin cell arrays received therein to be exposed to the outside therethrough, and the first bus bar and the second bus bar are fixed on respective external surfaces of the first cell carrier and the second cell carrier having the opening portions.

6. The battery module of claim 5, wherein electrode terminals formed at the end portions of the plurality of coin cell arrays are wire-bonded to the first bar and the second bus bar, respectively, through the opening portions.

7. The battery module of any one of the preceding claims, further comprising:
a sensing circuit unit comprising
a first sensing wire and a second sensing wire which are arranged between the first bus bar and the second bus bar at a front or rear side of the cell structure and first end portions of the first sensing wire is connected to the first bus bar and the second sensing wire is connected to the second bus bar; and
a sensing connector electrically connected to second end portions of the first sensing wire and the second sensing wire.

8. The battery module of claim 7, wherein the first cover or the second cover has an opening portion through which one portion of the first bus bar or the second bar, or the sensing connector is exposed to the outside.

9. The battery module of any one of the preceding claims, wherein the first end plate and the second end plate have an external plate exposed to the outside and an internal plate covered with the external plate and brought into contact with the cell structure and the first bus bar and the second bus bar, and wherein the external plate includes a concave-convex portion.

10. The battery module of any one of the preceding claims, further comprising:
a first clamp arranged on an upper portion of the cell structure;
a second clamp arranged on a lower portion of the cell structure, the first clamp and the second clamp each have a structure of a bar extending from a center portion of the first end plate to a center portion of the second end plate, and a first end portion of the first clamp and the second clamp joined to the first end plate and a second end portion of the first clamp and the second clamp joined to the second end plate.

11. A method of manufacturing a battery module including coin cells, the method comprising:
forming a plurality of coin cell arrays by stacking a plurality of coin cells;
receiving the plurality of coin cell arrays in a plurality of receiving holes in a first carrier and in a plurality of receiving holes in a second cell carrier, the plurality of receiving holes in each of the first cell carrier and the second cell carrier having a preset alignment structure;
connecting electrically electrode terminals of coin cell arrays received in the first carrier to a first bus bar fixed on one side surface of the first cell carrier and connecting electrically electrode terminals of coin cell arrays received in the second carrier to a second bus bar fixed on one side surface of the second cell carrier;
arranging a first cover in front of the first cell carrier and a second cover behind, the second cell carrier;
arranging a first end plate on a first side surface of the first cell carrier and a second end plate on a side surface of the second cell carrier;
combining the first end plate with the first cover;
combining the second end plate with the second cover; and
arranging a first end portion of a first clamp to an upper center portion of the first end plate;
arranging a second end portion of the first clamp to an upper center portion of the second end plate;
arranging a first end portion of a second clamp to a lower center portion of the first end plate; and
arranging a second end portion of the second clamp to a lower center portion of the second end plate.

12. The method of claim 11, wherein each of the plurality of coin cells has a first surface on which a first polarity electrode terminal is formed and a second surface, as a surface opposite in direction to the first surface, on which a second polarity electrode terminal is formed, and
wherein the forming of the plurality of coin cell arrays comprises:
aligning the plurality of coin cells along a row configured where that the first surface and the second surface alternately face upward;
connecting electrically electrode terminals of adjacent coin cells with each other alternately in an upward direction and then in a downward direction according to the order of arrangement of the coin cells in a state of being aligned along a row for electrical connections by a bonding wire; and
stacking the plurality of coin cells while bending the bonding wire.

13. The method of claim 12, wherein a direction in which the bonding wire is arranged is not in parallel to a direction in which the coin cells are arranged.

14. The method of claim 13, wherein a direction in which the bonding wire is arranged intersects a line connecting centers of the coin cells aligned along a row.

15. The method of claim 12, wherein the forming of the plurality of coin cell arrays further comprises: pressing in a direction of stacking the plurality of stacked coin cells in the forming of the plurality of coin cell arrays, dispensing glue successively in a line in the stacking direction on a side surface of a cylindrical structure formed as a result of the stacking, and fixing a stacked structure.
